# EUROPÄISCHE PATENTSCHRIFT

(11) **EP 2 456 838 B1**
(45) Veröffentlichungstag und Bekanntmachung des Hinweises auf die Patenterteilung: **07.12.2016**
(21) Anmeldenummer: 10765967.4
(22) Anmeldetag: 08.10.2010
(51) Int. Cl.: F16B 11/00, C09J 9/00

(54) **BEFESTIGUNGSMITTEL UND VERFAHREN ZUR FIXIERUNG EINES GEGENSTANDS AUF EINER UNTERLAGE**
FIXING AGENT AND METHOD FOR FIXING AN OBJECT ON A BASE
PRODUIT DE FIXATION ET PROCÉDÉ DE FIXATION D'UN OBJET SUR UN SUPPORT

(30) Priorität: 10.10.2009 DE 102009049027
(43) Veröffentlichungstag der Anmeldung: 30.05.2012
(73) Patentinhaber: Glabete GmbH, 73061 Ebersbach/Fils (DE)
(72) Erfinder: RONNER, Christian, CH-8750 Glarus (CH)
(74) Vertreter: Ruckh, Rainer Gerhard
(86) Internationale Anmeldenummer: PCT/EP2010/006153
(87) Internationale Veröffentlichungsnummer: WO 2011/042196

(56) Entgegenhaltungen:
- EP-A1- 0 366 026
- EP-A1- 1 536 148
- DE-A1-102009 023 285

## Beschreibung

Die Erfindung betrifft ein Befestigungsmittel und ein Verfahren zur Fixierung eines Gegenstands auf einer Unterlage.

Ein spezifischer Anwendungsbereich des in Rede stehenden Verfahrens beziehungsweise des in Rede stehenden Befestigungsmittels ist die Fixierung von Gegenständen an Wänden von Gebäuden und dergleichen. Insbesondere im Sanitär- und Küchenbereich sind die Wände mit Wandverkleidungen bestehend aus Kacheln, Fliesen, Stein- oder Marmorplatten versehen. Generell bezieht sich das Verfahren auf unterschiedlichste Anwendungsgebiete wie den Flugzeugbau, Schiffsbau und Stahlbau.

Um an derartigen Wänden Ausstattungsartikel wie Möbel, Leuchten, sanitäre Einrichtungsgegenstände wie Handtuchhalter oder dergleichen zu befestigen, können insbesondere in bekannter Weise Befestigungsmittel in Form von Schrauben eingesetzt werden. Hierzu müssen jedoch zuerst Bohrungen in die Wände eingearbeitet werden, wobei in die Bohrungen Dübel eingeführt werden. Um eine Beschädigung der hochwertigen Wandverkleidungen wie Kacheln und dergleichen zu vermeiden, werden derartige Bohrungen üblicherweise in die Fugen zwischen den Kacheln eingearbeitet, was den Anbringungsort der Befestigungsmittel in unerwünschter Weise einschränkt. Ein weiterer Nachteil besteht darin, dass für den Fall, dass der Anbringungsort eines Ausstattungsartikels nach einiger Zeit wieder geändert werden soll, am alten Anbringungsort die Bohrungen sichtbar freiliegen, was den optischen Gesamteindruck der Wand auch dann noch erheblich beeinträchtigt, wenn die Bohrungen nachträglich mit einer Füllmasse wieder gefüllt werden.

Um derartige Nachteile zu vermeiden, ist versucht worden, Befestigungsmittel in Form von Schrauben durch Klebemittel zu ersetzen.

Im einfachsten Fall können hierzu Klebestreifen eingesetzt werden, im einfachsten Fall doppelseitiges Klebeband. Nachteilig hierbei ist einerseits, dass sich derartige Befestigungsmittel im Lauf der Zeit wieder lösen. Ein weiterer Nachteil besteht darin, dass mit diesen keine schwereren Ausstattungsartikel an Wänden befestigt werden können.

Prinzipiell ist auch der Einsatz von aerobem Klebstoff als Befestigungsmittel zur Fixierung von Gegenständen an Unterlagen wie Wänden eines Raumes eines Gebäudes denkbar. Ein Problem hierbei besteht jedoch darin, dass derartige aerobe Klebstoffe mehrere Stunden aushärten müssen, wobei hierzu eine Feuchtigkeitszufuhr zum aeroben Klebstoff notwendig ist. Wird jedoch eine Schicht von aerobem Klebstoff auf den Gegenstand aufgetragen und dann der Gegenstand mit der Schicht des aeroben Klebstoffs gegen die Unterlage gedrückt, ist die zwischen der Unterlage und dem Gegenstand liegende Schicht von der Umgebungsluft abgeschottet, so dass ein Aushärten des aeroben Klebstoffs nicht mehr möglich ist.

Ein Montagesystem, das den Einsatz derartiger aeroben Klebstoffe ermöglicht, ist aus der WO 03/036106 bekannt.

Dieses Montagesystem dient zur ortsfesten Anbringung von Gegenständen, wie Handtuchhaltern, Regalen, Leuchten oder dergleichen Ausstattungsartikel an einer Wand, Decke oder dergleichen Fläche, insbesondere in mit Kacheln, Marmorplatten oder mit dergleichen Wandverkleidungen ausgestatteten Räumen. Das Montagesystem besteht aus verschiedenartigen Befestigungselementen und einem Haft- und Verbindungsmittel, welches von einem aeroben Klebstoff gebildet sein kann. Die Befestigungselemente bestehen aus Sintermetallen, die je nach Einsatzzweck in ihrer Form anzupassen sind. Nachteilig bei derartigen Systemen sind sehr lange Aushärtezeiten des Klebstoffs, die bis zu zwölf Stunden betragen können, wodurch die Montagefreundlichkeit der Systeme stark beeinträchtigt ist.

Das Befestigungselement dient zur Aufnahme eines Elements zur Halterung des Gegenstands und weist einen Grundkörper auf, der an seiner zur Wand zeigenden Rückseite eine Ausnehmung und eine in letztere einmündende Einfüllöffnung besitzt, über welche das Haft- beziehungsweise Verbindungsmittel zwischen das Befestigungselement und der Wand eingebracht wird.

Das Befestigungselement weist für das Entweichen der von dem in die Ausnehmung eingebrachten Haft- beziehungsweise Verbindungsmittel verdrängten Luft wenigstens eine flüssigkeits- und gasdurchlässige Öffnung auf, die von der Ausnehmung bis in eine weitere Oberfläche des Befestigungselements reicht und die überschüssiges Haft- beziehungsweise Verbindungsmittel aufnimmt.

Die der Wand zugewandte Rückseite des Grundkörpers ist wenigstens in Teilbereichen derart flüssigkeits- und gasdurchlässig, so dass das beim Aushärten des in der Ausnehmung befindlichen Haft- und Verbindungsmittels entstehende Gas entweichen beziehungsweise flüchtende Bindemittel ausdunsten kann und zugleich Umgebungsluft an dieses Haft- und Verbindungsmittel gelangt, wodurch dieses aushärten kann und so für eine stabile und belastbare Fixierung des Befestigungsmittels an der Wand sorgt.

Nachteilig hierbei ist jedoch, dass die Ausbildung des Grundkörpers einen nicht unerheblichen konstruktiven Zusatzaufwand mit sich bringt und insbesondere auch die freie Gestaltung des Befestigungsmittels beeinträchtigt.

Die einen nachveröffentlichten Stand der Technik bildende WO 2009/156013 A1 betrifft ein Befestigungsmittel zur Fixierung zweier Gegenstände, bestehend aus einer Mischung aus einem aeroben Klebstoff und einem hydrophilen Stoff, wobei dem hydrophilen Stoff dosierte Feuchtigkeit zugegeben ist.

Das Befestigungsmittel ist als Montageset ausgebildet, welches zwei Aufnahmen zur getrennten Lagerung des aeroben Klebstoff und des hydrophilen Stoffs aufweist, wobei aus den Aufnahmen der aerobe Klebstoff und der hydrophile Stoff zur Anmischung des Befestigungsmittels entnehmbar sind.

Die EP 1 536 148 A1 betrifft eine Anordnung zum Applizieren von Klebstoff auf mindestens zwei Substrate. Diese besteht aus einer Mehrzahl von abgeschlossenen Kapseln, die mit dem Klebstoff gefüllt sind, und einem Trägermaterial, welches die Kapseln zumindest teilweise bildet und/oder verbindet. Die Kapseln und/oder das Trägermaterial sind zumindest teilweise mit einem Haftklebstoff zur sofortigen Fixierung der Kapseln auf den Substraten beschichtet. Wenn die Kapseln zwischen die Substrate gebracht werden, werden sie durch den Haftklebstoff relativ zueinander in Position gehalten, bis die endgültige Verklebung tragfähig ist. Eine externe Fixierung entfällt somit.

Aus der nicht vorveröffentlichten DE 10 2009 023 285 A1 ist ein Befestigungsmittel bekannt, welches aus einer Mischung aus aerobem Klebstoff und einem hydrophilen Stoff besteht.

Durch die Zugabe des hydrophilen Stoffes zum aeroben Klebstoff entsteht eine das Befestigungsmittel bildende Mischung, die nicht mehr in Oberflächenkontakt mit feuchter Umgebungsluft gebracht werden muss, um dann von dieser Oberfläche her auszuhärten. Vielmehr sorgt der in der Mischung vorhandene, den aeroben Klebstoff durchsetzende hydrophile Stoff dafür, dass der in der Mischung enthaltene aerobe Klebstoff von innen her auch dann aushärten kann, wenn kein äußerer Kontakt mehr zu der Feuchtigkeit enthaltenden Umgebungsluft mehr gegeben ist, das heißt wenn die Mischung allseitig von diffusionsdichten Flächen umgeben ist. Die zum Aushärten benötigte Feuchtigkeit beziehungsweise der benötigte Sauerstoff ist in dem hydrophilen Stoff selbst vorhanden, da dieser aufgrund seiner hydrophilen Eigenschaften genug Feuchtigkeit enthält, die für das Aushärten des aeroben Klebstoffs in der das Befestigungsmittel bildenden Mischung benötigt wird.

Da die hydrophilen Stoffe ihre Feuchtigkeit je nach Umgebungsbedingungen an die Umgebung abgeben oder auch Feuchtigkeit von der Umgebung aufnehmen, kann der Feuchtigkeitsgehalt der hydrophilen Stoffe je nach Anwendungsfall nicht groß genug sein um nach Mischung mit dem aeroben Klebstoff ein vollständiges Aushärten der Mischung zu gewährleisten.

Der Menge an Feuchtigkeit im hydrophilen Stoff beziehungsweise in der Mischung des hydrophilen Stoffs mit aerobem Klebstoff ist jedoch eine hohe Bedeutung zuzumessen. Zuviel Feuchtigkeit zerstört die Klebung, zu wenig Feuchtigkeit führt zu keiner Reaktion im aeroben Klebstoff, der insbesondere von Polymeren gebildet ist, so dass eine Aushärtung ausbleibt.

Um den geeigneten Feuchtigkeitsgehalt in dem Befestigungsmittel zu erhalten, wird gemäß der DE 10 2009 023 285 der Mischung aus aerobem Klebstoff und hydrophilem Stoff dosiert Feuchtigkeit zugeführt. Insbesondere erfolgt dabei eine dosierte Zugabe von Feuchtigkeit zum hydrophilen Stoff bevor dieser mit dem aeroben Klebstoff gemischt wird.

Besonders geeignet für eine dosierte Flüssigkeitszufuhr ist ein Spatel aus Holz, der zur Mischung der Komponenten verwendet wird und der zuvor in Wasser oder allgemein in eine Flüssigkeitsmenge getaucht wird. Die Wassermenge oder allgemein Flüssigkeitsmenge, die der Spatel aufnehmen kann, bildet eine dosierte Feuchtigkeitsmenge, die der Mischung von aerobem Klebstoff und hydrophilem Stoff zugeführt wird. Dabei kann der hydrophile Stoff als Feuchtigkeitspuffer wirken, der überschüssige Feuchtigkeit aufnehmen und bei Bedarf wieder abgeben kann. Durch den Mischvorgang gelangt die Feuchtigkeit in das gesamte Volumen der Mischung, wodurch diese vollständig aushärten kann. Alternativ zu einem Spatel können auch andere Dosierer für die Flüssigkeitszufuhr verwendet werden. Prinzipiell ist auch die Verwendung von gekapselten Elementen, die Flüssigkeit enthalten, möglich. Diese bersten beim Mischungsvorgang und geben dann die Flüssigkeit in die Mischung ab. Durch die Zugabe der Kapselungen ebenso wie durch die Zugabe des hydrophilen Stoffes können die Zug- und Scherfestigkeiten des Befestigungsmittels verbessert werden. Prinzipiell kann dem hydrophilen Stoff auch Speichergranulat als Feuchtigkeitsspeicher zugegeben werden.

Die Aushärtung erfolgt wegen der Vermischung mit hydrophilen Stoffen wesentlich schneller als bei allen anderen Verfahren.

Damit können mit dem Befestigungsmittel Gegenstände einfach dadurch fixiert werden, dass eine Schicht des Befestigungsmittels zwischen die beiden Gegenstände eingebracht wird.

Dabei kann die Schicht des Befestigungsmittels in beliebige Aussparungen oder Ausnehmungen der Gegenstände eingebracht werden und bei Zusammenführen der Gegenstände vollständig in einem geschlossenen, das heißt von diffusionsdichten Flächen begrenzten und von der Umgebungsluft isolierten Innenraum liegen, wobei dennoch ein sicheres Aushärten des aeroben Klebstoffs und damit eine auch mit hohen Kräften belastbare Verbindung der Gegenstände geschaffen wird. Weiterhin kann das Befestigungsmittel auch auf ebene Flächen aufgebracht werden. Auch hier kann das Befestigungsmittel zwischen zwei diffusionsdichten Flächen eingesetzt werden, um diese zu verbinden.

In der DE 10 2009 023 285 ist die Ausbildung des aeroben Klebstoffs in Form von silanen MS-Polymeren beschrieben.

Wie in der DE 10 2009 023 285 weiter ausgeführt, können die hydrophilen Stoffe von Salzen gebildet sein. Alternativ sind die hydrophilen Stoffe von hydrophilen Trägerfasern gebildet, die von Naturfasern oder Chemiefasern gebildet sein können und welche bevorzugt aus Baumwolle bestehen. Prinzipiell eignen sich als hydrophile Stoffe Kreide, Mehl, Blähton, Galaktose, Watte, Flachs, Hanf, Viskose, Zellulose, Seegras, Filz oder auch Holzfasern, Luftporenfilter oder allgemein atmungsaktive Stoffe.

Ein wesentlicher Vorteil des in der DE 10 2009 023 285 beschriebenen Befestigungsmittels besteht darin, dass ein genaues Mischungsverhältnis von aerobem Klebstoff und hydrophilem Stoff nicht eingehalten werden muss, um die Funktion des Befestigungsmittels zu gewährleisten. Um ein möglichst gutes Aushärten des aeroben Klebstoffs zu gewährleisten ist es lediglich vorteilhaft, wenn der hydrophile Stoff möglichst homogen mit dem aeroben Klebstoff vermengt wird.

Weiterhin ist für die Anwendung des Befestigungsmittels wesentlich, dass die Komponenten des Befestigungsmittels erst kurz vor Gebrauch des Befestigungsmittels zusammengemischt werden.

Zweckmäßigerweise wird hierzu ein Montageset, bereitgestellt, welches zwei Aufnahmen zur getrennten Lagerung des aeroben Klebstoffs und des hydrophilen Stoffs, insbesondere der hydrophilen Trägerfaser aufweist. Aus diesen Aufnahmen können dann die Komponenten in gewünschter Menge zur Anmischung des Befestigungsmittels entnommen werden.

Da keine genauen Mischungsverhältnisse von aerobem Klebstoff und hydrophilem Stoff eingehalten werden müssen, lässt sich das Befestigungsmittel aus den Komponenten auch von ungeübten Personen schnell und einfach anmischen.

Ein weiterer Vorteil des Befestigungsmittels besteht darin, dass mit diesem eine reversible Verbindung zweier Gegenstände hergestellt wird. Dies beruht darauf, dass die durch das Befestigungsmittel hergestellte Verbindung der Gegenstände äußerst stabil gegen wirkende Zugkräfte, jedoch weniger stabil gegen wirkende Scherkräfte ist. Damit kann durch Abdrehen eines Gegenstands die durch das Befestigungsmittel hergestellte Verbindung gelöst werden. Dann können die Verbindungsstellen durch einen Spatel oder dergleichen von den Resten des Befestigungsmittels gesäubert werden.

Gemäß dem in der DE 10 2009 023 285 beschriebenen Verfahren wird mit folgenden Verfahrensschritten ein Gegenstand auf einer Unterlage fixiert:
Zunächst erfolgt die Anmischung des Befestigungsmittels durch Vermengen von hydrophilem Stoff, insbesondere von hydrophilen Trägerfasern mit aerobem Klebstoff. Danach wird eine Schicht des Befestigungsmittels auf den Gegenstand aufgebracht und dieser anschließend auf der Unterlage durch Andrücken der Schicht des Befestigungsmittels an der Unterlage fixiert. In dieser Schicht härtet der aerobe Klebstoff durch in dem hydrophilen Stoff enthaltene Feuchtigkeit aus.

Besonders vorteilhaft erfolgt vor Vermengen des aeroben Klebstoffs mit dem hydrophilen Stoff eine dosierte Flüssigkeitszufuhr zum hydrophilen Stoff.

Insbesondere werden der aerobe Klebstoff und der hydrophile Stoff miteinander gemischt. Der hydrophile Stoff wird vorab so getrocknet, dass der hydrophile Stoff in der Mischung nicht mit dem aerobem Klebstoff reagiert, und dass zur Anmischung des Befestigungsmittels dem Gemisch Feuchtigkeit zugeführt wird.

Vorteilhaft wird vor Mischung mit dem aeroben Klebstoff der hydrophile Stoff auf zumindest näherungsweise 0 % Luftfeuchtigkeit getrocknet.

Ein Vorteil bei dieser Variante besteht darin, dass das Gemisch aus aerobem Klebstoff und getrocknetem hydrophilem Stoff auch über lange Zeit gelagert werden kann, da der hydrophile Stoff keine Feuchtigkeit enthält, die zu einem Durchreagieren mit dem aeroben Klebstoff zu dem Befestigungsmittel führen würde.

Das Gemisch kann dann als gebrauchsfertige Mischung in geeignete Gebinde abgefüllt und an Kunden geliefert werden, die dann dem Gemisch nur noch Flüssigkeit oder Feuchtigkeit, insbesondere in Form von Wasser, zur Herstellung des Befestigungsmittels zuführen müssen.

Vorteilhaft wird zur Herstellung der Mischung dem aeroben Klebstoff maximal so lange getrockneter hydrophiler Stoff zugeführt, bis dieser keinen hydrophilen Stoff mehr aufnimmt.

Die Einhaltung dieses Mischungsverhältnisses kann einfach dadurch kontrolliert werden, dass visuell festgestellt wird, wie lange der aerobe Klebstoff bei Zugabe von hydrophilem Stoff diesen noch aufnehmen kann.

Gemäß einer vorteilhaften Ausgestaltung wird zur Anmischung des Befestigungsmittels eine 2 Kammer-Kartusche verwendet, wobei in eine Kammer die Mischung aus aerobem Klebstoff und getrocknetem hydrophilem Stoff gefüllt wird und die andere Kammer mit Flüssigkeit, insbesondere Wasser, befüllt wird. Mittels einer Mischdüse werden die aus den Kammern austretende Mischung und die Flüssigkeit gemischt.

Die 2 Kammer-Kartusche ist äußerst einfach zu handhaben und weist als Bauset einen kompakten Aufbau auf.

Weiterhin ist vorteilhaft, dass der nach Anmischen von Befestigungsmittel gegebenenfalls in der Kammer verbleibende Rest der Mischung von aerobem Klebstoff und getrocknetem hydrophilem Stoff noch für einen späteren Gebrauch genutzt werden kann und in der Kammer der Kartusche auch über große Zeiträume gelagert werden kann.

Gemäß einer alternativen Ausgestaltung wird die Mischung aus aerobem Klebstoff und getrocknetem hydrophilem Stoff mit einem Feuchtigkeit enthaltenden Gegenstand in Kontakt gebracht.

Diese Variante nutzt den Umstand, dass bereits kleine Flüssigkeitsmengen, die beispielsweise in angefeuchteten Holzbauteilen enthalten sind, ausreichen, um die Mischung aus aerobem Klebstoff und hydrophilem Stoff zu dem Befestigungsmittel durchreagieren beziehungsweise das Befestigungsmittel aushärten zu lassen.

Besonders vorteilhaft kann die Unterlage von einer Wand und der Gegenstand von einem Befestigungselement gebildet sein, an welchem ein Ausstattungsartikel angebracht werden kann.

Dabei wird der Ausstattungsartikel an dem Befestigungselement angebracht, nachdem die Schicht des Befestigungsmittels zwischen der Wand und dem Befestigungsmittel ausgehärtet ist. Generell können Ausstattungsgegenstände auch direkt mit dem Befestigungsmittel an der Wand angebracht werden.

Die Befestigung des Befestigungsmittels an der Wand erfolgt generell ohne Verwendung von Schrauben und dergleichen, so dass in die Wand keinerlei Bohrungen eingearbeitet werden.

Damit kann die Befestigung ohne Beschädigungen oder Beeinträchtigungen der Wand erfolgen.

Dies ist besonders vorteilhaft wenn die Wand eine Wandverkleidung aus Kacheln, Fliesen oder Stein- oder Marmorplatten aufweist, auf welcher das Befestigungselement fixiert wird.

Für die empfindliche und typischerweise hochwertige Wandverkleidung besteht beim Befestigungsprozess keinerlei Gefahr einer Beschädigung oder Beeinträchtigung.

Der Erfindung liegt die Aufgabe zugrunde, das in der DE 10 2009 023 285 beschriebene Befestigungsmittel und Verfahren hinsichtlich ihrer Funktionalität weiter zu verbessern.

Zur Lösung dieser Aufgabe sind die Merkmale der Ansprüche 1 und 8 vorgesehen. Vorteilhafte Ausführungsformen und zweckmäßige Weiterbildungen der Erfindung sind in den Unteransprüchen beschrieben.

Das erfindungsgemäße Befestigungsmittel dient zur Fixierung zweier Gegenstände. Das Befestigungsmittel besteht aus einer Mischung aus einem aeroben Klebstoff und einem hydrophilen Stoff und ist als Montageset ausgebildet. Gemäß einer ersten Variante der Erfindung weist das Montageset zwei Aufnahmen zur getrennten Lagerung des aeroben Klebstoffs und des hydrophilen Stoffs auf, wobei aus den Aufnahmen der aerobe Klebstoff und der hydrophile Stoff zur Anmischung des Befestigungsmittels entnehmbar sind. Dabei ist der in der Aufnahme gelagerte hydrophile Stoff befeuchtet.

Der Vorteil dieses Montagesets besteht darin, dass dem hydrophilen Stoff in der ersten Aufnahme bereits hinreichend Feuchtigkeit zugegeben ist. Damit muss die Bedienperson beim Anmischen des Befestigungsmittels keine Feuchtigkeit mehr zugeben. Zum Anmischen des Befestigungsmittels reicht vielmehr die Durchmischung des Feuchtigkeit enthaltenden hydrophilen Stoffes mit dem getrennt gelagerten aeroben Klebstoff aus.

Die Erstellung des Befestigungsmittels wird daher für die Bedienperson weiter vereinfacht.

Besonders vorteilhaft weist das Montageset ein Sachet mit zwei getrennten Kammern, welche die Aufnahme bilden, auf Dabei sind die Kammern des Sachets durch eine Klemmspange getrennt.

Das Sachet besteht vorzugsweise aus Kunststoff, alternativ aus Aluminiumverbundmaterial, in jedem Fall jedoch aus einem dichten, gasundurchlässigen Material. Die Klemmspange bildet ein Trennmittel, durch welches die Kammern des Sachet dicht verschlossen und so vollständig voneinander getrennt sind. Zum Anmischen des Befestigungsmittels braucht nur die Klemmspange mechanisch gelöst werden, das heißt vom Sachet abgezogen werden. Damit ist die Trennung zwischen den Kammern aufgehoben und der mit Feuchtigkeit versehene hydrophile Stoff aus der ersten Kammer kann mit dem aeroben Klebstoff in der zweiten Kammer durchmischt werden. Vorteilhaft hierbei ist, dass das Durchmischen bei geschlossenem Sachet von der Bedienperson von außen betätigt, insbesondere etwas durchgewalkt wird. Dieser Mischvorgang kann schnell und einfach durchgeführt werden.

Generell sind auch andere Ausbildungen des Montagesets, beispielsweise in Form von Spritzen, denkbar.

Vorteilhaft kann die Schichtdicke des Befestigungsmittels einfach durch die Struktur des hydrophilen Stoffes vorgegeben sein. Weist der hydrophile Stoff nämlich eine körnige Struktur auf, so kann das Befestigungsmittel nur so weit zusammen gepresst werden, bis dessen Schichtdicke dem Kerndurchmesser des hydrophilen Stoffes entspricht.

Die Erfindung wird im Folgenden anhand der Zeichnungen erläutert. Es zeigen:
- Figur 1:: Schematische Darstellung eines Montagesets gemäß DE 10 2009 023 285 mit den Komponenten des erfindungsgemäßen Befestigungsmittels.
- Figur 2:: In einem Gefäß angemischtes Befestigungsmittel.

- Figur 3:: Fixierung eines Gegenstands an einer Wand mittels des Befestigungsmittels gemäß Figur 1.
- Figur 4:: Erste Ausführungsform eines erfindungsgemäßen Montagesets.
- Figur 5:: Zweite Ausführungsform eines Montagesets (nicht zur Erfindung gehörend).

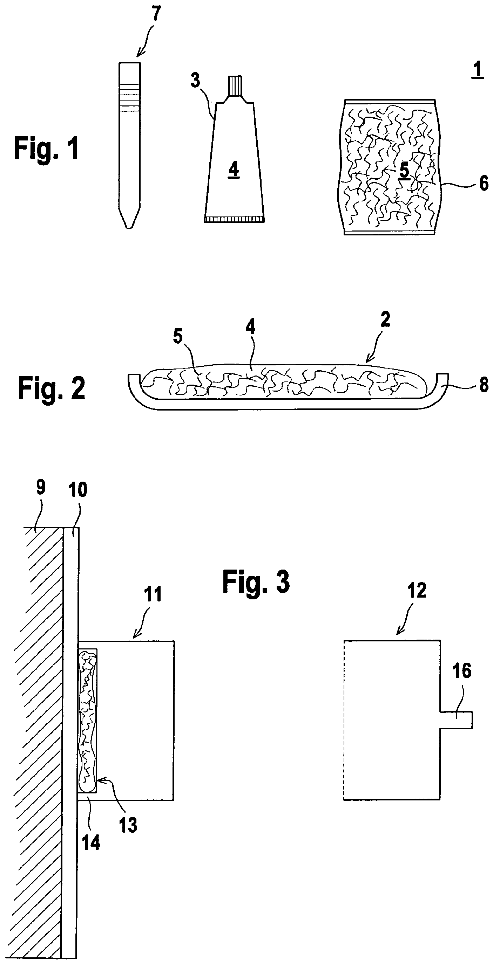

Figur 1 zeigt schematisch ein in der DE 10 2009 023 285 beschriebenes Montageset 1 mit den einzelnen Komponenten zur Herstellung eines Befestigungsmittels 2, welches in Figur 2 in angemischtem Zustand gezeigt ist.

Das Montageset 1 umfasst eine Tube 3, in welcher ein aerober Klebstoff 4 gelagert ist. Der aerobe Klebstoff 4 ist im vorliegenden Fall von silanen MS-Polymeren gebildet. Weiterhin umfasst das Montageset 1 eine Menge von hydrophilen Stoffen, die im vorliegenden Fall von hydrophilen Trägerfasern 5 gebildet sind, welche in einem Beutel 6 oder dergleichen gelagert sind. Im vorliegenden Fall wird als hydrophile Trägerfaser 5 ungetrocknete Baumwolle verwendet. Das Montageset 1 wird komplettiert durch einen Spatel 7 sowie gegebenenfalls durch eine nicht dargestellte Bedienungsanleitung.

Zur Herstellung des Befestigungsmittels 2 wird dieses unmittelbar vor Gebrauch zur Fixierung von Gegenständen aus den Komponenten, nämlich dem aeroben Klebstoff 4 und der hydrophilen Trägerfaser 5, angemischt. Hierzu werden aerober Klebstoff 4 und hydrophile Trägerfasern 5 wie in Figur 2 dargestellt in ein Gefäß 8 oder dergleichen gegeben und dann mit dem Spatel 7 homogen vermischt.

Der Spatel 7 besteht bevorzugt aus Holz. Um in der Mischung einen für eine komplette Aushärtung geeigneten Feuchtigkeitsgehalt zu erhalten, wird der Spatel 7 zunächst in Wasser getaucht. Die somit enthaltene Feuchtigkeit im Spatel 7 wird dann auf den hydrophilen Stoff übertragen, wonach dieser unter Verwendung des Spatels 7 mit dem aeroben Klebstoff 4 gemischt wird. Vorzugsweise beträgt der Volumenanteil an hydrophilen Trägerfasern 5 in der Mischung etwa 30 bis 40 % wobei der Gewichtsanteil der hydrophilen Trägerfaser 5 in der Mischung in der Größenordnung von 10 % liegt.

Unmittelbar nach Anmischen des Befestigungsmittels 2 wird dieses zur Fixierung zweier Gegenstände verwendet.

Ein Beispiel hierfür zeigt Figur 3. In Figur 3 ist der Ausschnitt einer Wand 9 eines Gebäudes, insbesondere eines Zimmers eines Wohnhauses dargestellt, auf welcher eine Wandverkleidung 10 in Form von Kacheln aufgebracht ist.

Auf der Wandverkleidung 10 der Wand 9 soll ein Befestigungsmittel 2 befestigt werden, an welchem dann ein Ausstattungsartikel, insbesondere ein sanitärer Einrichtungsgegenstand wie ein Handtuchhalter, ein Regal, eine Duscharmatur oder dergleichen befestigt werden soll. Generell können mehrere derartiger Befestigungselemente 11 zur Fixierung eines Ausstattungsartikels vorgesehen sein.

In Figur 3 ist schematisch ein Verschlusselement 12 als Bestandteil des Ausstattungsartikels dargestellt, welches auf dem Befestigungselement 11 fixiert werden kann.

Das Befestigungselement 11 weist eine im wesentlichen kreisscheibenförmige Kontur auf. An der der Wand 9 zugewandten Unterseite befindet sich eine Ausnehmung 13, die von einem über den gesamten Umfang des Befestigungselements 11 umlaufenden Randsegment 14 begrenzt ist.

Das in Figur 2 dargestellte, frisch angemischte Befestigungsmittel 2 wird, beispielsweise mit dem Spatel 7 bei von der Wand 9 abgenommenem Befestigungselement 11 in die Ausnehmung 13 des Befestigungselements 11 eingefüllt, wodurch eine definierte, modellierbare Schicht des Befestigungselements 11 gebildet wird.

Dann wird das Befestigungsmittel 2 mit der Schicht des Befestigungselements 11 auf die Wandverkleidung 10 der Wand 9 aufgesetzt. Dadurch, dass der aerobe Klebstoff 4 im Befestigungsmittel 2 sofort eine gewisse Klebkraft aufweist, ist das Befestigungselement 11, das nur einen Durchmesser von wenigen Zentimetern und ein geringes Eigengewicht aufweist, sicher an der Wandverkleidung 10 gehalten.

Um ein seitliches Austreten des Befestigungsmittels 2 am Befestigungselement 11 bei Aufsetzen auf die Wandverkleidung 10 zu vermeiden, können im Befestigungselement 11 in axialer Richtung verlaufende, an der Ausnehmung 13 ausmündende Bohrungen vorgesehen sein, in welche überschüssiges Befestigungsmittel 2 bei Aufsetzen auf die Wandverkleidung 10 eindringen kann.

Obwohl nach Aufsetzen des Befestigungselements 11 auf die Wandverkleidung 10 das Befestigungsmittel 2 in einem völlig geschlossenen Raum liegt und keinen Kontakt zur Umgebungsluft hat, kann der aerobe Klebstoff 4 im Befestigungsmittel 2 durch die Zugabe der hydrophilen Trägerfaser 5 vollständig von innen heraus aushärten, da die hydrophile Trägerfaser 5 die hierzu erforderliche Feuchtigkeit beziehungsweise den hierzu erforderlichen Sauerstoff gespeichert hat.

Sobald das Befestigungsmittel 2 ausgehärtet ist, ist eine belastbare Befestigung des Befestigungselements 11 an der Wand 9 gegeben, so dass an diesem der Ausstattungsartikel angebracht werden kann. Hierzu wird im vorliegenden Fall das Verschlusselement 12 durch eine Schraub- oder Steckverbindung auf dem Befestigungselement 11 befestigt. Das Verschlusselement 12 weist ein Aufnahmeelement 16 auf, an welchem dann der Ausstattungsartikel wie zum Beispiel ein Handtuchhalter befestigt werden kann.

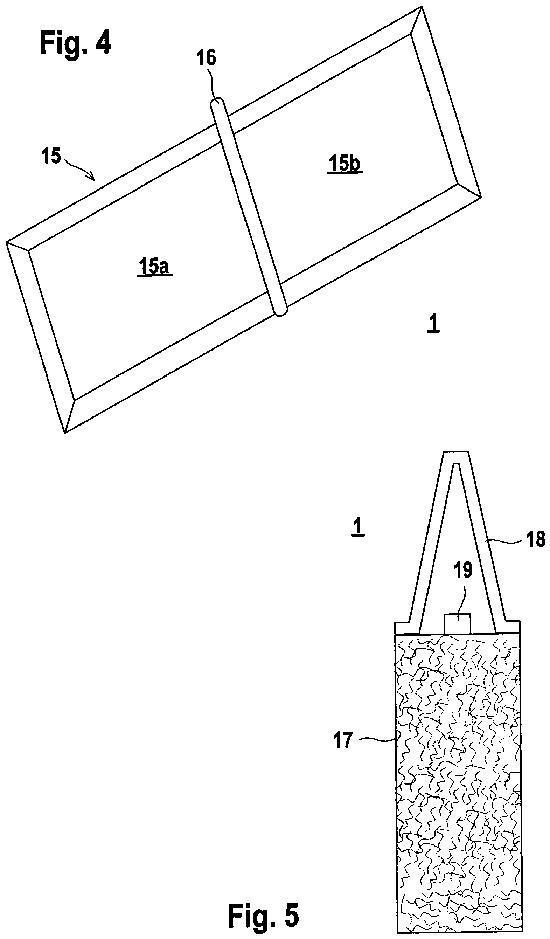

Figur 4 zeigt eine erste Variante des erfindungsgemäßen Montagesets 1. Das Montageset 1 umfasst ein Sachet 15 und eine Klemmspange 16. Das Sachet 15 besteht aus einem dicht, insbesondere gasdicht schließenden Material, insbesondere aus einem Kunststoff. Dieser ist als biegbare, flexible Folie ausgebildet. Das Sachet 15 bildet einen flachen Behälter mit rechteckförmigem Querschnitt. Die von außen aufgesetzte Klemmspange 16 unterteilt den Innenraum des Sachets 15 in zwei vollständig getrennte Kammern 15a, 15b, das heißt, die Klemmspange 16 bildet eine dichte Trennwand zwischen den Kammern 15a, 15b aus.

Eine erste Kammer 15a enthält den hydrophilen Stoff mit einer vorgegebenen Beimischung an Feuchtigkeit, insbesondere Wasser. Die Feuchtigkeitszugabe ist so gewählt, dass diese zur Erstellung des Befestigungsmittels 2 ausreichend ist. Vorteilhaft enthält der hydrophile Stoff bezogen auf seine Masse 8 - 12 % Feuchtigkeit. Die zweite Kammer 15b enthält den aeroben Klebstoff 4.

Zur Herstellung des Befestigungsmittels 2 aus den in den Kammern 15a, 15b gelagerten Komponenten wird die Klemmspange 16 von dem Sachet 15 abgenommen, das heißt die Trennwand zwischen den Kammern 15a, 15b ist entfernt. Dann kann durch manuelles Betätigen an der Außenseite des Sachets 15 der aerobe Klebstoff 4 mit dem Feuchtigkeit enthaltenden hydrophilen Stoff durchmischt werden. Damit ist das Befestigungsmittel 2 bereits gebrauchsfertig. Insbesondere ist keine nachträgliche Zugabe von Feuchtigkeit mehr nötig. Figur 5 zeigt eine weitere Variante des erfindungsgemäßen Montagesets 1. Das Montageset 1 umfasst als Aufnahme eine Kartusche 17 und als Ausführorgan eine Düse 18. Die Kartusche 17 weist einen eine Öffnung verschließenden Verschluss 19 an ihrer Oberseite auf.

In der Kartusche 17 befindet sich eine Mischung aus hydrophilem Stoff und aerobem Klebstoff, wobei der hydrophile Stoff so mit getrocknet ist, dass der hydrophile Stoff nicht mit dem aeroben Klebstoff reagiert. Vorzugsweise ist der hydrophile Stoff auf eine Restfeuchte nahe 0 % getrocknet. Das Mischungsverhältnis von hydrophilem Stoff und aerobem Klebstoff ist geeignet so gewählt, dass mit diesem ohne weitere Zugabe von hydrophilem Stoff oder aerobem Klebstoff das Befestigungsmittel gebildet werden kann.

Die Düse 18 besteht im vorliegenden Fall zumindest im Bereich deren Seitenwände aus porösem Material, welches ein Flüssigkeits- oder Feuchtigkeitsspeicher bildet. In dem Flüssigkeits- oder Feuchtigkeitsspeicher ist Wasser in ausreichender Form gespeichert, damit mit diesem die Mischung in der Aufnahme reagieren kann.

Zur Lagerung bleibt der Verschluss 19 der Kartusche 17 geschlossen. Soll mit der Mischung in der Kartusche 17 das Befestigungsmittel erzeugt und anschließend verwendet werden, wird durch Aufsetzen der Düse 18 auf die Kartusche 17 der Verschluss 19 geöffnet. Wird dann die Mischung aus der Kartusche 17 ausgeleitet und gelangt in den Innenraum der Düse 18, so kommt sie in Kontakt mit dem Flüssigkeits- oder Feuchtigkeitsspeicher. Dadurch gelangt Flüssigkeit, insbesondere Wasser, aus dem Flüssigkeits- oder Feuchtigkeitsspeicher der Düse 18 in Kontakt mit der Mischung, so dass der hydrophile Stoff mit dem aeroben Klebstoff reagieren kann. Dadurch wird gebrauchsfertiges Befestigungsmaterial 2 aus der Düse 18 ausgeleitet und kann sofort zur Herstellung von Verbindungen genutzt werden.

### Bezugszeichenliste

- (1): Montageset
- (2): Befestigungsmittel
- (3): Tube
- (4): aerober Klebstoff
- (5): hydrophile Trägerfaser
- (6): Beutel
- (7): Spatel
- (8): Gefäß
- (9): Wand
- (10): Wandverkleidung
- (11): Befestigungselement
- (12): Verschlusselement
- (13): Ausnehmung
- (14): Randsegment
- *(15)*: *Sachet*
- *(15a)*: *Kammer*
- *(15b)*: *Kammer*
- *(16)*: *Klemmspange*

## Patentansprüche

1. Befestigungsmittel (2) zur Fixierung zweier Gegenstände, welches aus einer Mischung aus einem aeroben Klebstoff (4) und einem hydrophilen Stoff besteht und welches als Montageset (1) ausgebildet ist, welches zwei Aufnahmen zur getrennten Lagerung des aeroben Klebstoffs (4) und des hydrophilen Stoffs aufweist, wobei aus den Aufnahmen der aerobe Klebstoff (4) und der hydrophile Stoff zur Anmischung des Befestigungsmittels (2) entnehmbar sind, **dadurch gekennzeichnet, dass** der in der Aufnahme gelagerte hydrophile Stoff befeuchtet ist, wobei der hydrophile Stoff bezogen auf dessen Masse 8 - 12 % Feuchtigkeit enthält.

2. Befestigungsmittel nach Anspruch 1, **dadurch gekennzeichnet, dass** das Montageset (1) ein Sachet (15) mit zwei getrennten Kammern (15a, 15b) aufweist, welche die Aufnahme bilden, wobei die Kammern (15a, 15b) des Sachets (15) durch eine Klemmspange (16) getrennt sind.

3. Befestigungsmittel nach einem der Ansprüche 1 oder 2, **dadurch gekennzeichnet, dass** der aerobe Klebstoff (4) von silanen MS-Polymeren gebildet ist.

4. Befestigungsmittel nach einem der Ansprüche 1 bis 3, **dadurch gekennzeichnet, dass** der hydrophile Stoff von einer hydrophilen Trägerfaser (5) gebildet ist, welche insbesondere aus Baumwolle besteht.

5. Befestigungsmittel nach einem der Ansprüche 1 bis 4, **dadurch gekennzeichnet, dass** dessen minimale Schichtdicke durch die Struktur des hydrophilen Stoffes vorgebbar ist.

6. Befestigungsmittel nach einem der Ansprüche 1 bis 5, **dadurch gekennzeichnet, dass** dessen Eigenschaften, insbesondere dessen Sollbruchstelle, Grundklebkraft und/oder Aushärtungsgeschwindigkeit durch Vorgabe des Mischungsverhältnisses von aerobem Klebstoff (4) und hydrophilem Stoff vorgebbar sind.

7. Verfahren zur Fixierung eines Gegenstands auf einer Unterlage, umfassend folgende Verfahrensschritte:
Anmischung des Befestigungsmittels (2) gemäß einem der Ansprüche 1 bis 7 durch Mischen von mit Feuchtigkeit versehenem, hydrophilem Stoff und aerobem Klebstoff (4), darauf folgendes Aufbringen einer Schicht des Befestigungsmittels (2) auf den Gegenstand,
und anschließendes Fixieren des Gegenstands auf der Unterlage durch Andrücken der Schicht des Befestigungsmittels (2) an der Unterlage,
wobei in dieser Schicht der aerobe Klebstoff (4) durch in dem hydrophilen Stoff enthaltenen Feuchtigkeit aushärtet.

8. Verfahren nach Anspruch 7, **dadurch gekennzeichnet, dass** zur Herstellung der Mischung dem aeroben Klebstoff (4) maximal so lange getrockneter hydrophiler Stoff zugeführt wird, bis dieser keinen hydrophilen Stoff mehr aufnimmt.

9. Verfahren nach einem der Ansprüche 8 oder 9, **dadurch gekennzeichnet, dass** der Gegenstand eine mechanische Befestigung, insbesondere eine Rohrschelle oder ein Adaptionsteil ist.

10. Verfahren nach einem der Ansprüche 7 oder 8, **dadurch gekennzeichnet, dass** die Unterlage von einer Wand (9) gebildet ist, und dass der Gegenstand von einem Befestigungselement (11) gebildet ist, an welchem ein Ausstattungsartikel angebracht werden kann, wobei die Wand (9) insbesondere eine Wandverkleidung (10) aus Kacheln, Fliesen oder Steinoder Marmorplatten aufweist, auf welcher das Befestigungselement (11) fixiert wird.

11. Verfahren nach Anspruch 10, **dadurch gekennzeichnet, dass** der Ausstattungsartikel an dem Befestigungselement (11) angebracht wird, nachdem die Schicht des Befestigungsmittels (2) zwischen der Wand (9) und dem Befestigungsmittel (2) ausgehärtet ist.

## Claims

1. Fixing agent (2) for fixing two objects, which agent consists of a mixture of an aerobic adhesive (4) and a hydrophilic substance and which has the form of a set (1), which comprises two receptacles for separate storage of the aerobic adhesive (4) and the hydrophilic substance, wherein the aerobic adhesive (4) and the hydrophilic substance are removable from the receptacles for mixing up of the fixing agent (2), **characterised in that** the hydrophilic substance stored in the receptacle is dampened, wherein the hydrophilic substance contains 8 to 12% moisture referred to the mass thereof.

2. Fixing agent according to claim 1, **characterised in that** the set (1) comprises a sachet (15) with two separate chambers (15a, 15b) which form the receptacles, wherein the chambers (15a, 15b) of the sachet (15) are separated by a clamping clasp (16).

3. Fixing agent according to one of claims 1 and 2, **characterised in that** the aerobic adhesive (4) is formed by silane MS polymers.

4. Fixing agent according to any one of claims 1 to 3, **characterised in that** the hydrophilic substance is formed by a hydrophilic carrier fibre (5) which consists of, in particular, cotton.

5. Fixing agent according to any one of claims 1 to 4, **characterised in that** the minimum layer thickness thereof is predeterminable by the structure of the hydrophilic substance.

6. Fixing agent according to any one of claims 1 to 5, **characterised in that** the properties thereof, particularly the rated breaking point, basic adhesive force and/or rate curing thereof are predeterminable by presetting the mixture ratio of aerobic adhesive (4) and hydrophilic substance.

7. Method of fixing an object to a substrate, comprising the following method steps:
mixing up the fixing agent (2) according to any one of claims 1 to 7 by mixing hydrophilic substance, which is provided with moisture, and aerobic adhesive (4),
subsequently applying a layer of the fixing agent (2) to the object and
subsequently fixing the object to the substrate by pressing the layer of the fixing agent (2) against the substrate, wherein in this layer the aerobic adhesive (4) hardens due to moisture contained in the hydrophilic substance.

8. Method according to claim 7, **characterised in that** for producing the mixture dry hydrophilic substance is supplied to the aerobic adhesive (4) at most until such time as the adhesive no longer absorbs hydrophilic substance.

9. Method according to one of claims 8 and 9, **characterised in that** the object is a mechanical fastening means, particularly a pipe clip or an adapter member.

10. Method according to one of claims 7 and 8, **characterised in that** the substrate is formed by a wall (9) and that the object is formed by a fastening element (11) on which a furnishing article can be mounted, wherein the wall (9) comprises, in particular, a wall cladding (10) of tiles, flags or stone or marble plates on which the fastening element (11) is fixed.

11. Method according to claim 10, **characterised in that** the furnishing article is mounted on the fastening element (11) after the layer of the fixing agent (2) between the wall (9) and the fixing agent (2) has hardened.

## Revendications

1. Moyen de fixation (2) dévolu au bocage à demeure de deux objets, constitué d'un mélange composé d'un adhésif aérobie (4) et d'une substance hydrophile, et réalisé en tant qu'ensemble de montage (1) pourvu de deux logements affectés au stockage séparé dudit adhésif aérobie (4) et de ladite substance hydrophile, ledit adhésif aérobie (4) et ladite substance hydrophile pouvant être prélevés desdits logements en vue d'amalgamer ledit moyen de fixation (2), **caractérisé par le fait que** la substance hydrophile stockée dans le logement est humectée, ladite substance hydrophile renfermant 8-12 % d'humidité rapportés à sa masse.

2. Moyen de fixation selon la revendication 1, **caractérisé par le fait que** l'ensemble de montage (1) comporte un sachet (15) présentant deux compartiments distincts (15a, 15b) qui forment le logement, lesdits compartiments (15a, 15b) dudit sachet (15) étant séparés par une barrette de pincement (16).

3. Moyen de fixation selon l'une des revendications 1 ou 2, **caractérisé par le fait que** l'adhésif aérobie (4) est constitué de polymères modifiés silane.

4. Moyen de fixation selon l'une des revendications 1 à 3, **caractérisé par le fait que** la substance hydrophile est constituée d'une fibre substrat hydrophile, consistant notamment en du coton.

5. Moyen de fixation selon l'une des revendications 1 à 4, **caractérisé par le fait que** l'épaisseur de couche minimale dudit moyen peut être préétablie par la structure de la substance hydrophile.

6. Moyen de fixation selon l'une des revendications 1 à 5, **caractérisé par le fait que** les propriétés dudit moyen, en particulier son point de rupture par destination, sa force d'adhérence fondamentale et/ou sa vitesse de durcissement, peuvent être préétablies par détermination préalable du rapport de mélange d'adhésif aérobie (4) et de substance hydrophile.

7. Procédé de blocage à demeure d'un objet sur une structure sous-jacente, incluant les étapes opératoires suivantes :
amalgame du moyen de fixation (2) conforme à l'une des revendications 1 à 6, par mélange d'un adhésif aérobie (4) et d'une substance hydrophile chargée d'humidité, suivi du dépôt d'une couche dudit moyen de fixation (2) sur l'objet, puis d'un blocage à demeure dudit objet sur ladite structure sous-jacente, en plaquant à force ladite couche dudit moyen de fixation (2) sur ladite structure sous-jacente, sachant que ledit adhésif aérobie (4) durcit, dans cette couche, sous l'effet de l'humidité renfermée par ladite substance hydrophile.

8. Procédé selon la revendication 7, **caractérisé par le fait que**, pour élaborer le mélange, une substance hydrophile séchée est adjointe à l'adhésif aérobie (4), au maximum jusqu'à ce que ce dernier n'absorbe plus de substance hydrophile.

9. Procédé selon l'une des revendications 7 ou 8, **caractérisé par le fait que** l'objet est une fixation mécanique, en particulier un collier de serrage de tubulures ou une pièce d'adaptation.

10. Procédé selon l'une des revendications 7 ou 8, **caractérisé par le fait que** la structure sous-jacente est constituée d'une paroi (9) ; et **par le fait que** l'objet est constitué d'un élément de fixation (11) sur lequel un article d'équipement peut être installé, ladite paroi (9) étant notamment dotée d'un revêtement mural (10) en des carreaux, en du carrelage ou en des dalles de pierre ou de marbre, sur lequel ledit élément de fixation (11) est bloqué à demeure.

11. Procédé selon la revendication 10, **caractérisé par le fait que** l'article d'équipement est installé sur l'élément de fixation (11) après durcissement de la couche du moyen de fixation (2) entre la paroi (9) et ledit moyen de fixation (2).
